**Europäisches Patentamt**

**European Patent Office**

**Office européen des brevets**

(19)

(11) Veröffentlichungsnummer: **0 347 583**

**A2**

(12) # EUROPÄISCHE PATENTANMELDUNG

(21) Anmeldenummer: **89108892.4**

(22) Anmeldetag: **18.05.89**

(51) Int. Cl.⁴: **B60T 8/48 , B60T 13/52**

(30) Priorität: **18.06.88 DE 3820657**

(43) Veröffentlichungstag der Anmeldung:
**27.12.89 Patentblatt 89/52**

(84) Benannte Vertragsstaaten:
**AT CH DE LI SE**

(71) Anmelder: **ROBERT BOSCH GMBH**
**Postfach 10 60 50**
**D-7000 Stuttgart 10(DE)**

(72) Erfinder: **Rittmannsberger, Norbert, Dr.**
**Dipl.-Ing.**
**Seestrasse 104**
**D-7000 Stuttgart 1(DE)**
Erfinder: **Wetzel, Gerhard, Dipl.-Ing.**
**Seestrasse 56**
**D-7000 Stuttgart 1(DE)**

(54) **Vakuummotor für Bremsanlagen in Fahrzeugen.**

(57) Ein Vakuummotor bekannter Bauart ist bisher für eine unabhängig von einem Bremspedal ausgeführte Betätigung mit einer an einem Handbremshebel oder einer Abstandsmeßeinrichtung angeschalteten Übertragungs- und Steuereinrichtung verbunden.

Die Anordnung berücksichtigt nur einen begrenzten Teil der Anwendungsmöglichkeiten eines Vakuummotors, während mit der erfindungsgemäßen Anwendung ein neuer wirkungsvoller Zweck erfüllt wird.

In einem Vakuummotor (100) mit einer ersten Kammer (20) und einer in Betätigungsrichtung nach einer trennenden beweglichen Wand (25) angeordneten zweiten Kammer (28) wird eine dritte Kammer (15) der ersten Kammer (20) vorgeschaltet. Mit dem Eintreten eines Antriebsschlupfregelvorgangs wird die dritte Kammer (15) in die Verbindung zwischen eine an den Atmosphärendruck angeschaltete Ventilanordnung (40) und die erste Kammer (20) gebracht. Die zweite Kammer (28) ist zugleich an eine Unterdruckquelle (44) geschaltet. Durch ein Druckgefälle zwischen erster (20) und zweiter Kammer (28) wird eine auf einen Mehrkreishauptzylinder (38) wirkende Verstellkraft zur Antriebsschlupfregelung erzeugt.

FIG. 1

## Vakuummotor für Bremsanlagen in Fahrzeugen

Stand der Technik

Die Erfindung geht aus von einem Vakuummotor nach der Gattung des Hauptanspruchs. Ein derartiger Vakuummotor ist bekannt (DE-OS 3705333, EP 0173054 A 2).

Bei dem durch die DE-OS 3705333 bekannten Vakuummotor ist eine Bremskraft an Radbremsen unabhängig von der Betätigung einer mit dem Bremspedal verbundenen Steuerstange mittels einer in einer beweglichen Wand des Vakuummotors angeordneten und auf eine Steuereinrichtung einwirkenden Stelleinrichtung aufbaubar.

Die Stelleinrichtung wird über eine beweglich angeordnete und durch eine Kammer konstanten Drucks führende Leitung betätigt. Die Leitung ist mit einer Ventilanordnung verbunden, die durch von einem Handbremshebel erzeugte und an ein Steuergerät übertragene Steuerbefehle an eine Druckquelle und eine Unterdruckquelle schaltbar ist.

Bei dem durch die EP 0173054 A 2 bekannten Vakuummotor ist eine Bremskraft unabhängig von der Betätigung der mit dem Bremspedal verbundenen Steuerstange mittels eines elastischen Zylinderraums aufbaubar, der durch eine Kammer konstanten Drucks führt und in eine Verbindung zwischen eine Kammer veränderbaren Drucks und eine Ventilanordnung, die mit Anschlüssen an eine Druckquelle und eine Unterdruckquelle ausgebildet ist, schaltbar ist. Die Ventilanordnung ist von den Befehlen eines Steuergerätes, das von einem Sensor gemessene Abstandswerte zwischen zwei Fahrzeugen verarbeitet, steuerbar und liegt an einer Druckquelle und einer Unterdruckquelle.

Bei den bekannten Vakuummotoren ist nur ein Teil der Verwendungsmöglichkeiten des unabhängig von dem Bremspedal ansteuerbaren Vakuummotors aufgezeigt.

Vorteile der Erfindung

Der erfindungsgemäße Vakuummotor mit den kennzeichnenden Merkmalen des Hauptanspruchs bietet demgegenüber den Vorteil einer einfachen Ausgestaltung und Verwendung in Bremsanlagen, die mit Antriebsschlupfregelanlagen sowie mit Blockierschutz- und Antriebsschlupfregelanlagen kombiniert werden können.

Durch die in den Unteransprüchen aufgeführten Maßnahmen sind vorteilhafte Weiterbildungen und Verbesserungen des im Hauptanspruch angegebenen Vakuummotors möglich.

Als besonders vorteilhaft ist das Anbringen einer sich in Richtung der Steuerstange an die zwei Kammern anschließenden dritten Kammer anzusehen, die eine einfache Verbindung der ersten Kammer mit einer Druckquelle und einer Unterdruckquelle über eine umschaltbare Ventilanordnung herstellt.

Die Merkmale der Ansprüche 4 und 5 lassen in der beweglichen Wand eine besonders einfache Ausbildung einer Übertragungsleitung zu, mittels der eine an einer Druck- und Unterdruckquelle liegende Ventilanordnung und die erste Kammer verbunden sind. Vorteilhaft ist für alle Ansprüche, daß für den erfindungsgemäßen Eingriff zur Antriebsschlupfregelung nur relativ geringe Änderungen an sonst handelsüblichen pneumatischen Vakuummotoren erforderlich sind.

Zeichnung

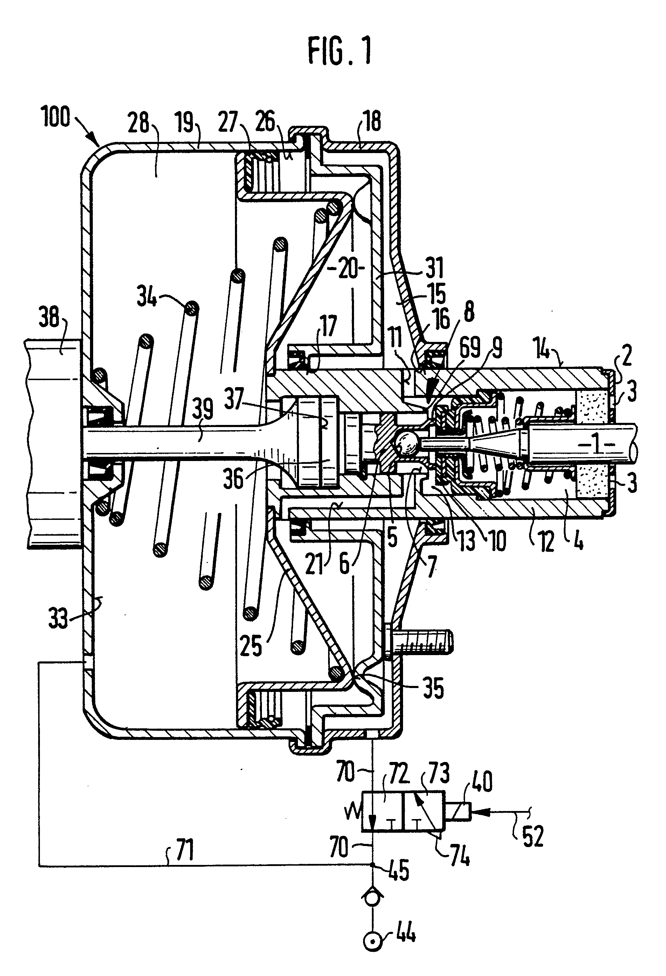

Ausführungsbeispiele der Erfindung sind in der Zeichnung dargestellt und in der nachfolgenden Beschreibung näher erläutert. Es zeigen Figur 1 bis 4 vier verschiedene Ausführungsbeispiele eines erfindungsgemäß ausgestalteten Vakuummotors für Bremsanlagen.

Beschreibung der Ausführungsbeispiele

Bei dem ersten Ausführungsbeispiel nach Figur 1 hat ein an sich bekannter Vakuummotor 100 für Bremsanlagen in Fahrzeugen eine von einem Bremspedal betätigbare und durch eine Eingangsseite 2 eines Aufnahmekolbens 12 des Vakuummotors 100 greifende Steuerstange 1. Ein topfförmiges Bodenteil 19 und ein Deckelteil 18 sind miteinander verbunden und bilden im wesentlichen das Gehäuse des Vakuummotors 100. Der Aufnahmekolben 12 durchragt abgedichtet eine Wandung des Deckelteils 18 in einer ersten Gehäusebohrung 16 und ist darin beweglich gelagert. An der Eingangsseite 2 des Aufnahmekolbens 12 sind Einlässe 3 für den Atmosphärendruck angebracht. Die Steuerstange 1 wird in Betätigungsrichtung durch einen an die Eingangsseite 2 anschließenden, im Aufnahmekolben 12 ausgebildeten und mit der Atmosphäre in Verbindung stehenden Steuerraum 4 hindurchgeführt und in einer Kalotte 5 eines fluchtend sich anschließenden Steuerkolbens 6 einer Steuereinrichtung 8 , der in einer Gleitbohrung 7 des Aufnahmekolbens 12 in Betätigungsrichtung geführt wird, bewegbar gelagert. Der Steuerkolben 6 unterbricht in der dargestellten Stellung mit ei-

2

nem der Eingangsseite 2 zugewandten ringförmigen Dichtwulst 9 in Verbindung mit einem von der Eingangsseite 2 aus entgegenstehenden und in dem Steuerraum 4 entgegen Federkraft verschiebbar angeordne ten Ventilelement 10 eine Strömungsverbindung vom Atmosphärendruck in dem Steuerraum 4 zu einer um einen Zylindermantel 14 des Aufnahmekolbens 12 ausgebildeten und von der Wandung des Deckelteiles 18 umschlossenen dritten Kammer 15. Zwischen das Bodenteil 19 und das Deckelteil 18 ist an ihrem Außenumfang eine abgewinkelte Zwischenwand 31 fest eingespannt, die die dritte Kammer 15 zusammen mit dem Deckelteil 18 in axialer Richtung begrenzt und die in ihrer Mitte eine zweite Gehäusebohrung 17 aufweist, in der der Aufnahmekolben 12 dicht geführt ist. Die dritte Kammer 15 erstreckt sich somit in radialer Richtung bis an einen Innenmantel des Deckelteils 18. Im Betätigungsfall des Vakuummotors 100 ist ein sich von der Eingangsseite 2 bis zu der ersten Gehäusebohrung 16 erstreckender Längenanteil des Aufnahmekolbens 12 in die dritte Kammer 15 hineinbewegbar. Eine Ventilkammer 13 im Aufnahmekolben 12, in die der Steuerkolben 6 mit dem Dichtwulst 9 und das Ventilelement 10 ragen, ist über einen radialen Durchgang 11 im Aufnahmekolben 12 mit der dritten Kammer 15 verbunden. Die Zwischenwand 31 trennt die dritte Kammer 15 von einer ersten Kammer 20, die der dritten Kammer 15 abgewandt durch eine bewegliche Wand 25 begrenzt wird. Die bewegliche Wand 25 ist an einem Innenmantel 26 des Bodenteils 19 gleitbar gelagert und trennt die erste Kammer 20 von einer im Bodenteil 19 ausgebildeten zweiten Kammer 28. Ein im Aufnahmekolben 12 ausgebildeter Kanal 21 ist zur ersten Kammer 20 und zur Gleitbohrung 7 hin offen, so daß über die Ventilkammer 13 und den Durchgang 11 solange ein Druckausgleich mit der dritten Kammer 15 besteht, solange nicht das Ventilelement 10 an einem festen Ventilsitz 69 der Steuereinrichtung 8 zur Anlage kommt. Der Aufnahmekolben 12 ist der Eingangsseite 2 abgewandt fest mit der beweglichen Wand 25 verbunden. Ein Dichtelement 27 am Umfang der beweglichen Wand 25 liegt an dem Innenmantel 26 an und sorgt für eine Abdichtung zwischen erster Kammer 20 und zweiter Kammer 28. Zwischen einer Stirnwand 33 des Bodenteiles 19 und der beweglichen Wand 25 ist eine Druckfeder 34 angeordnet, die die bewegliche Wand 25 in Richtung zu einem an der Zwischenwand 31 vorgesehenen Anschlag 35 beaufschlagt. Die bewegliche Wand 25 wird z.B. bei einer Betätigung der Steuerstange 1 mit dieser zusammen in Bewegung gesetzt. Diese Bewegung wird auf ein in dem Zentrum des Aufnahmekolbens 12 angebrachtes und an den Steuerkolben 6 in Betätigungsrichtung anschließendes Übertragungselement 36, das mit einer Druckfläche 37 einer durch die zweite Kammer 28 hindurchgeführten Druckstange 39 eines Mehrkreishauptzylinders 38 in Verbindung steht, übertragen.

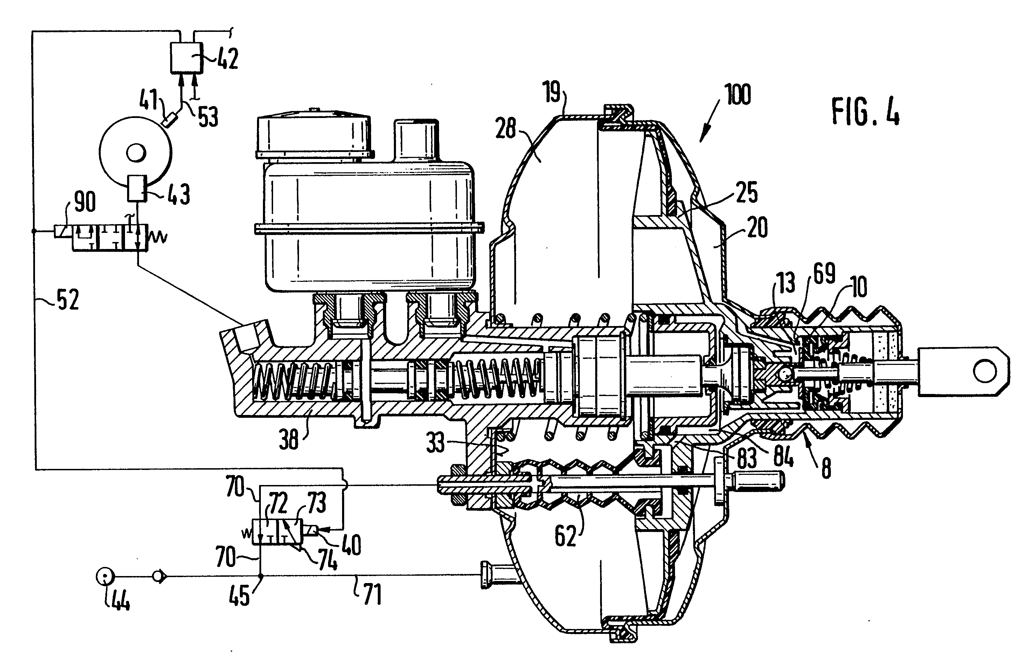

Die dritte Kammer 15 steht über einen Leitungsabschnitt 70 mit einer Unterdruckquelle 44 in Verbindung. In dem Leitungsabschnitt 70 ist eine elektrisch ansteuerbare Ventilanordnung 40 vorgesehen, die vorzugsweise als 3/2-Magnetventil ausgebildet ist und in einer ersten Ventilstellung 72 die Verbindung zwischen Unterdruckquelle 44 und dritter Kammer 15 öffnet. Von dem Leitungsabschnitt 70 zweigt an einem Anschluß 45 zwischen der Ventilanordnung 40 und der Unterdruckquelle 44 ein Leitungsabschnitt 71 zur zweiten Kammer 28 ab. Die elektrisch ansteuerbare Ventilanordnung 40 steht mit einem elektronischen Steuergerät 42, das Signale mindestens eines an Rädern angeordneten Sensors 41 bekannter Bauart erhält, durch eine Steuerleitung 52 in Verbindung (siehe Figur 4). Der Sensor 41 ist mit dem Steuergerät 42 durch eine Signalleitung 53 verbunden (siehe Figur 4).

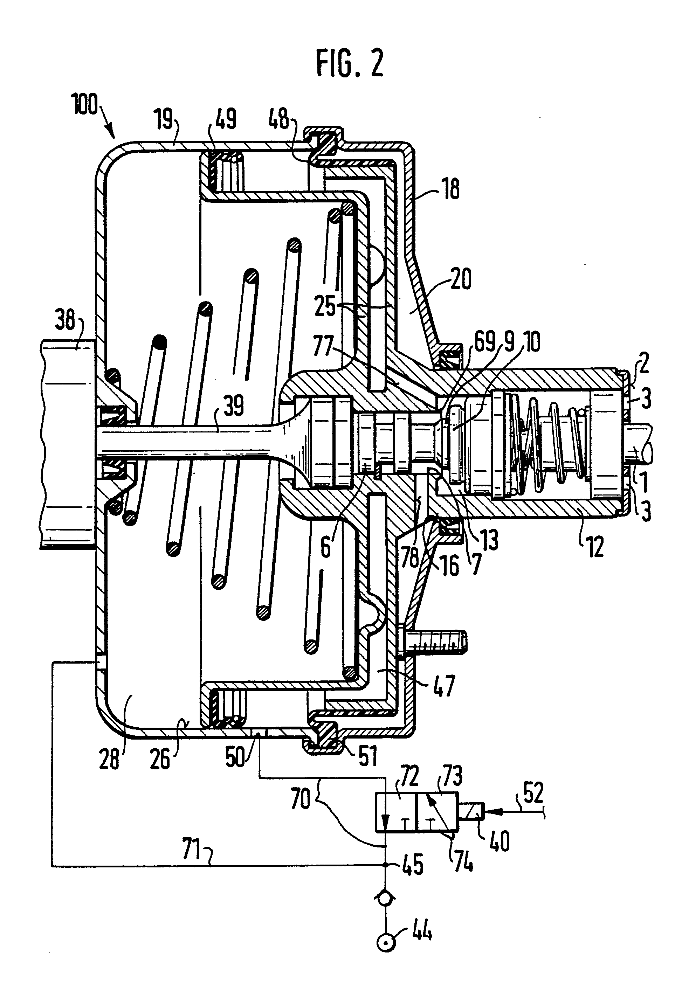

Bei dem Ausführungsbeispiel nach Figur 2 werden für gleiche und gleichwirkende Bauteile dieselben Bezugszeichen wie beim ersten Ausführungsbeispiel nach Figur 1 verwendet. Im Gegensatz zum Ausführungsbeispiel nach Figur 1 ist bei dem Ausführungsbeispiel nach Figur 2 keine Zwischenwand und keine dritte Kammer vorgesehen, sondern die Ventilkammer 13 steht über den Ventilsitz 69, die Gleitbohrung 7 und einen Kanal 78 im Aufnahmekolben 12 mit der ersten Kammer 20 in Verbindung, die zwischen der beweglichen Wand 25 und dem Deckelteil 18 eingeschlossen ist. In der beweglichen Wand 25 ist eine Übertragungsleitung 47 ausgebildet, die über einen Kanal 77 mit der Ventil kammer 13 und über einen Anschluß 50 im Bodenteil 19 mit dem Leitungsabschnitt 70 verbunden ist. Die Übertragungsleitung 47 wird in dem gezeigten Ausführungsbeispiel mit einem der ersten Kammer 20 zugewandten ersten Dichtelement 48 und einem der zweiten Kammer 28 zugewandten zweiten Dichtelement 49 abgedichtet und behält während einer Betätigung des Vakuummotors 100 ein annähernd konstantes Volumen.

Die Ausbildung des Dichtelementes 48 als Membrane gewährleistet bei einer in axialer Richtung durchgeführten Stellbewegung der beweglichen Wand 25 den möglichst nahe an einer Halterung 51 der Membrane gelegenen Anschluß 50 des Leitungsabschnittes 70.

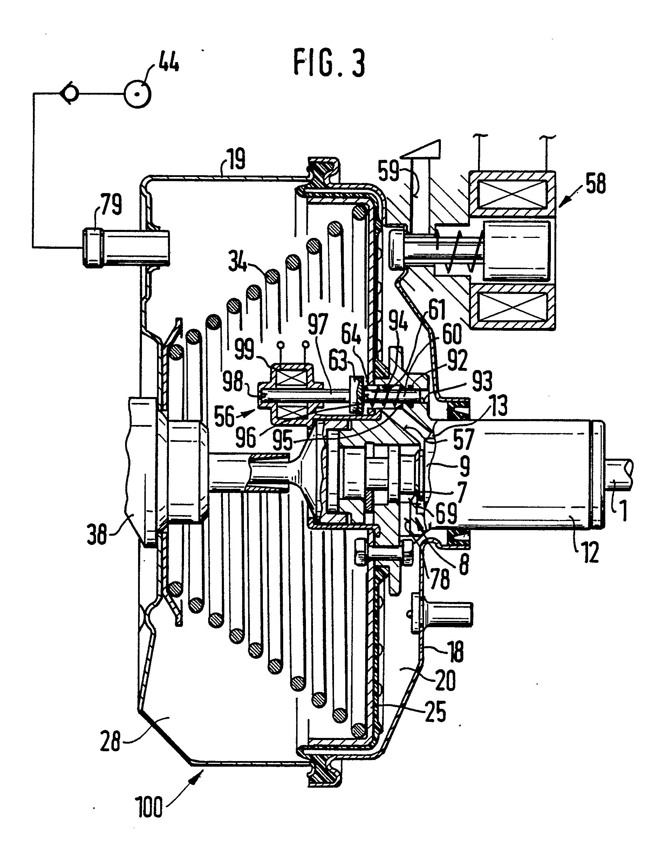

Bei dem Ausführungsbeispiel nach Figur 3 werden für gleiche und gleichwirkende Bauteile dieselben Bezugszeichen wie bei den Ausführungsbeispielen nach den Figuren 1 und 2 verwendet.

In der Figur 3 ist in der beweglichen Wand 25 eine durch ein elektromagnetisch betätigbares erstes Ventil 56 steuerbare Verbindungsleitung 57 vorgesehen, die von der zweiten Kammer 28 zur Ventilkammer 13 führt. Von der Ventilkammer 13 aus ist eine an dem Ventilsitz 69 und über einen Teil der Gleitbohrung 7 und weiter durch den Kanal 78 führende Verbindung zu der ersten Kammer 20 ausgebildet. Ein zweites elektromagnetisch ansteuerbares Ventil 58 verbindet oder trennt eine mit der Atmosphäre verbundene Druckleitung 59 von der ersten Kammer 20.

Im Antriebsschlupfregelfall liegt ein Ventilschließglied 63 des ersten Ventils 56 an einem Ventilsitz 64 an der beweglichen Wand 25 dicht an. Das erste Ventil 56 ist dabei erregt und wirkt gegen eine Druckfeder 61.

Im Bremsfall und Blockierschutzregelfall bleiben das erste Ventil 56 und das zweite Ventil 58 in der dargestellten Ausgangsstellung unerregt. Die zweite Kammer 28 ist dabei an dem Ventilschließglied 63 und dem Ventilsitz 64 vorbei durch die Verbindungsleitung 57 mit der Ventilkammer 13 verbunden. Die Ventilkammer 13 ist dabei durch das Anliegen des Dichtwulstes 9 am Ventilsitz 69 und eine Abdichtung 92 eines mit dem Ventilschließglied 63 in Richtung der ersten Kammer 20 verbundenen Ventilstößels 60 von der ersten Kammer 20 abgetrennt. Der Ventilstößel 60 ist in einer zu dem Ventilschließglied 63 fluchtenden Führungsbohrung 93 des Aufnahmekolbens 12 axial bewegbar gelagert.

An die Führungsbohrung 93 schließt in Richtung zum Ventilsitz 64 hin mit einer Stufe 95 eine ebenfalls in dem Aufnahmekolben 12 ausgebildete Bohrung 94 größeren Durchmessers an. Zwischen der Stufe 95 der Bohrung 94 und einer zu einem Dichtmantel des Ventilschließgliedes 63 mit Hinterschnitt ausgebildeten inneren Anlagefläche 96 ist die Druckfeder 61 angeordnet, die in dem Ausführungsbeispiel nach Figur 3 das Ventilschließglied 63 in eine einen Durchlaß zwischen zweiter Kammer 28 und Ventilkammer 13 bewirkende Stellung bringt. Das Ventilschließglied 63 ist mit einem als Anker des ersten Ventils 56 dienenden Stößel 97 verbunden, der beispielhaft an einer Stirnfläche 98 eines Ventilgehäuses 99 durch die Druckfeder 61 in Anlage gehalten wird, solange das erste Ventil 56 nicht erregt ist.

Bei dem Ausführungsbeispiel nach Figur 4 werden für gleiche und gleichwirkende Bauteile dieselben Bezugszeichen wie bei den vorausgegangenen Ausführungsbeispielen verwendet. In der Figur 4 ist ein zwischen der beweglichen Wand 25 und der gegenüberliegenden Stirnwand 33 des Bodenteiles 19 angeordneter Leitungsabschnitt 62 so ausgebildet, daß er die zweite Kammer 28 durchdringend während eines Stellhubs der beweglichen Wand 25 in seiner Länge veränderbar ist. Vorteilhaft ist die Verwendung eines elastischen Werkstoffs für den vorzugsweise als Faltenbalg ausgebildeten Leitungsabschnitt 62, der in gleicher Funktionsweise auch im Zentrum der zweiten Kammer 28 angeordnet werden kann. Der Leitungsabschnitt 62 ist über den Leitungsabschnitt 70 mit der Ventilanordnung 40 verbunden und führt andererseits über Durchgänge 83, 84 zur Steuereinrichtung 8. Die zweite Kammer 28 ist immer mit der Unterdruckquelle 44 verbunden.

Die Wirkungsweise der gewöhnlichen Bremsanlage bleibt bei einem Bremsvorgang unbeeinflußt von der für den Antriebsschlupfregelfall jeweils vorgesehenen Ausbildung des Vakuummotors 100.

Soll bei dem Ausführungsbeispiel nach Figur 1 ein bestimmter Bremsdruck von dem Bremspedal aufgebaut werden, wird die Steuerstange 1 gegen den Steuerkolben 6 bewegt und nimmt dabei das an den Steuerkolben 6 angelegte Ventilelement 10 bis zu dem Ventilsitz 69 der Steuereinrichtung 8 mit. Mit dem Aufsitzen des Ventilelementes 10 auf dem Ventilsitz 69 wird eine Atmosphärendruck aus dem Steuerraum 4 über die Gleitbohrung 7 und den Kanal 21 in die erste Kammer 20 strömen lassende Verbindung geöffnet. Die dritte Kammer 15 bleibt mit dem Leitungsabschnitt 70 durch die Ventilanordnung 40 an die Unterdruckquelle 44 angeschlossen, während die zweite Kammer 28 über den Leitungsabschnitt 71 ebenfalls in Verbindung mit der Unterdruckquelle 44 steht. Durch das zwischen erster Kammer 20 und zweiter Kammer 28 bestehende Druckgefälle und eine damit bewirkte Verstellkraft wird die bewegliche Wand 25 mit der Steuereinrichtung 8 in Richtung der zweiten Kammer 28 fortbewegt und kann über die mitgeführte Druckstange 39 eine Verstellkraft auf einen in dem Mehrkreishauptzylinder 38 angeordneten Kolben zur Druckerzeugung übertragen. Durch eine fortwährende Bewegung des Bremspedals in Druckaufbaurichtung werden die Steuerstange 1 und der mitgeführte Steuerkolben 6 den Dichtwulst 9 von dem Ventilelement 10 weiter trennen, wodurch die Verstellkraft erhöht wird. Der Steuerkolben 6 wird dabei in Verbindung mit dem Übertragungselement 36 stehen und einen bestimmten Anteil der Verstellkraft in Betätigungsrichtung übernehmen.

Will beim Anfahren eines der Räder seinen dem Vortrieb dienenden Zustand (Schlupf) verlassen, so wird dies in bekannter Weise von mindestens einem Sensor 41 erfaßt und durch ein Signal des elektronischen Steuergerätes 42 an die Ventilanordnung 40 weitergegeben (siehe Figur 4). Mit der Ansteuerung der Ventilanordnung 40 wird diese in eine zweite Ventilstellung 73 geschaltet und läßt somit Atmosphärendruck über einen Anschluß 74 in den Leitungsabschnitt 70 und die dritte Kammer 15 strömen, der über den Durchgang 11 und den Kanal 21 in der ersten Kammer 20 wirksam wird. Die zweite Kammer 28 bleibt mit der Unterdruckquelle 44 verbunden. Durch das zwischen der ersten Kammer 20 und der zweiten Kammer 28 entstehende Druckgefälle und die daraus resultierende Verstellkraft wird die bewegliche Wand 25 mit der Steuereinrichtung 8 in Richtung des Mehrkreishauptzylinders 38 bewegt und kann somit mit der von der Druckstange 39 abgegebenen Verstellkraft des Vakuummotors 100 in dem Mehrkreishauptzylinder 38 einen hydraulischen Druck bewirken. Der hydraulische Druck des Mehrkreishauptzylinders 38 ist in bekannter Weise elektromagnetisch betätigten Ventilanordnungen 90 einer bekannten Blockierschutzregelanlage zuleitbar, die vom elektronischen Steuergerät 42 durch Antriebsschlupfregelsignale angesteuert werden und dabei diesen Druck zur Abbremsung der Antriebsräder bei Schlupf in mindestens einem Radbremszylinder 43 wirksam werden lassen. Mit der Beendigung des Antriebsschlupfregelzustandes wird die Ventilanordnung 40 in die erste Ventilstellung 72 zurückgeschaltet und die erste Kammer 20 und die dritte Kammer 15 in die Verbindung mit der zweiten Kammer 28 und der Unterdruckquelle 44 gebracht. Die bewegliche Wand 25 kann somit von der mit einer Vorspannkraft ausgebildeten Druckfeder 34 in ihre Ausgangslage am Anschlag 35 zurückgestellt werden.

In der Figur 2 ist eine Anordnung gezeigt, in der über die in der beweglichen Wand 25 angebrachte Übertragungsleitung 47 im Antriebsschlupfregelfall durch die Kanäle 77, 78 die Ventilkammer 13 und die Gleitbohrung 7 die erste Kammer 20 mittels der sich in der zweiten Ventilstellung 73 befindlichen erregten Ventilanordnung 40 mit dem Atmosphärendruck verbunden wird. Die zweite Kammer 28 ist dabei mit der Unterdruckquelle 44 verbunden, wodurch ein Druckgefälle zwischen erster Kammer 20 und zweiter Kammer 28 zur Betätigung des Mehrkreishauptzylinders entsteht. Bei Entregung schaltet die Ventilanordnung 40 in die erste Ventilstellung 72 um und die erste Kammer 20 liegt wieder an der Unterdruckquelle 44 an, so daß die bewegliche Wand 25 in ihre Ausgangsposition zurückkehren kann.

In der Figur 3 ist eine Anordnung gezeigt, bei der im Antriebsschlupfregelfall das zweite Ventil 58 und das erste Ventil 56 zugleich erregt werden und durch das erste Ventil 56 die Verbindungsleitung 57 geschlossen wird. Mittels des dann zur Druckleitung 59 geöffneten Ventils 58 herrscht in der ersten Kammer 20 Atmosphärendruck und es wird eine bestimmte Verstellkraft in Richtung des Mehrkreishauptzylinders 38 aufgebaut. Die zweite Kammer 28 steht mit einem Anschluß 79 in Verbindung mit der Unterdruckquelle 44.

Ist dieser dem Vortrieb dienende Vorgang abgeschlossen, wird die Verbindungsleitung 57 durch eine Entregung des ersten Ventils 56 geöffnet und die Druckleitung 59 zur ersten Kammer 20 durch Entregung des zweiten Ventiles 58 geschlossen. Die bewegliche Wand 25 wird danach durch die Druckfeder 34 zurückgestellt.

In der Figur 4 ist eine Anordnung gezeigt, bei der im Antriebsschlupfregelfall die Ventilanordnung 40 in die zweite Ventilstellung 73 bringbar ist, wodurch in der ersten Kammer 20 Atmosphärendruck aufbaubar ist. Der Atmosphärendruck kann dabei wie dargestellt durch den axial durch die zweite Kammer 28 führenden und zu ihr elastisch abgedichteten Leitungsabschnitt 62 zu den in der beweglichen Wand 25 angebrachten Durchgängen 83, 84 und von dort an der geöffneten Ventilanordnung zwischen Ventilelement 10 und Ventilsitz 69 vorbei zur ersten Kammer 20 geführt werden. Die zweite Kammer 28 hat lediglich eine Verbindung über den Leitungsabschnitt 71 zur Unterdruckquelle 44. Die bewegliche Wand 25 ist damit in der bekannten Weise durch eine Verstellkraft in Richtung des Mehrkreishauptzylinders 38 bewegbar.

## Ansprüche

1. Vakuummotor für Bremsanlagen in Fahrzeugen, deren Rädern je ein über eine Bremsleitung mit einem Mehrkreishauptzylinder in Verbindung stehender Radbremszylinder zugeordnet ist, mit einer von einem Bremspedal betätigbaren und auf eine Steuereinrichtung wirkenden Steuerstange, durch deren Betätigung ein Druckgefälle zwischen zwei durch eine bewegliche Wand getrennte Kammern, die in einem Gehäuse des Vakuummotors liegen, steuerbar ist und eine Verstellkraft in Richtung des Mehrkreishauptzylinders bewirkt wird, sowie einer mittelbar auf die Steuereinrichtung einwirkenden elektromagnetischen Ventilanordnung, deren Ansteuerung mittels eines elektronischen Steuergerätes in Verbindung mit einer Druckquelle und einer Unterdruckquelle ebenfalls ein Druckgefälle in den beiden Kammern bewirkt, durch das unabhängig von der vom Bremspedal betätigbaren Steuerstange eine Verstellkraft zu dem Mehrkreishauptzylinder hin erzeugt werden kann, dadurch gekennzeichnet, daß Signale mindestens eines an den Rädern angeordneten Sensors (41) im Antriebsschlupfregelfall erfaßt und an das Steuergerät (42) weitergegeben werden und daß dadurch die elektromagnetische Ventilanordnung (40, 56, 58) derart ansteuerbar ist, daß eine Verstellkraft auf den Mehrkreishauptzylinder (38) für eine Antriebsschlupfregelung an mindestens einem Radbremszylinder (43) erzeugt wird.

2. Vakuummotor für Bremsanlagen nach Anspruch 1, dadurch gekennzeichnet, daß eine in Richtung der Steuerstange (1) sich an die beiden Kammern (20, 28) anschließende dritte Kammer (15) wenigstens im Antriebsschlupfregelfall in Verbindung mit mindestens einer der bei den Kammern (20, 28) steht und daß die dritte Kammer (15) weiterhin durch die elektromagnetische Ventilanordnung (40) an die Unterdruck erzeugende (44) oder die Druck erzeugende Druckquelle (74) anschließbar ist.

3. Vakuummotor für Bremsanlagen nach Anspruch 2, dadurch gekennzeichnet, daß die dritte Kammer (15) radial sich erstreckend bis an einen Innenmantel eines Deckelteiles (18) des Gehäuses (18, 19) heranreichend ausbildbar ist.

4. Vakuummotor für Bremsanlagen nach Anspruch 1, dadurch gekennzeichnet, daß in der beweglichen Wand (25) eine Übertragungsleitung (47) vorgesehen ist, die wenigstens im Antriebsschlupfregelfall mit mindestens einer der Kammern (20, 28) in Verbindung steht und durch die elektromagnetische Ventilanordnung (40) an die Unterdruckquelle (44) oder die Druckquelle (74) anschließbar ist.

5. Vakuummotor für Bremsanlagen nach Anspruch 4, dadurch gekennzeichnet, daß die in der beweglichen Wand (25) vorgesehene Übertragungsleitung (47) ein annähernd konstantes Volumen während einer Betätigung des Vakuummotors (100) behält.

6. Vakuummotor für Bremsanlagen nach Anspruch 1, dadurch gekennzeichnet, daß die elektromagnetische Ventilanordnung durch ein elektromagnetisch betätigbares erstes Ventil (56) und ein elektromagnetisch betätigbares zweites Ventil (58) gebildet wird und durch das elektromagnetisch betätigbare erste Ventil (56) eine Verbindungsleitung (57) steuerbar ist, die von einer mit der Unterdruckquelle (44) verbundenen zweiten Kammer (28) zur Steuereinrichtung (8, 13) führt und das zweite elektromagnetisch betätigbare Ventil (58) eine Druckleitung (59) von der als Druckquelle dienenden Atmosphäre zur ersten Kammer (20) steuert.

7. Vakuummotor für Bremsanlagen nach Anspruch 6, dadurch gekennzeichnet, daß bei Erregung des zweiten Ventils (58) dieses die Verbindung zwischen Atmosphäre und erster Kammer (20) öffnet und das erste Ventil (56) geschlossen wird und bei einer Entregung des zweiten Ventils (58) dieses die Verbindung zwischen der Atmosphäre und der ersten Kammer (20) schließt und das erste Ventil (56) geöffnet wird.

8. Vakuummotor für Bremsanlagen nach Anspruch 1, dadurch gekennzeichnet, daß eine an Atmosphärendruck und die Unterdruckquelle (44) anschließbare Ventilanordnung (40) in Verbindung mit einem zwischen der beweglichen Wand (25) und einem Bodenteil (19) des Gehäuses ausgebildeten und zur Steuereinrichtung (8) hin offenen Leitungsabschnitt (62) steht und der Leitungsabschnitt (62) während eines Stellhubs der beweglichen Wand (25) in seiner Lage veränderbar ist.

9. Vakuummotor für Bremsanlagen nach Anspruch 8, dadurch gekennzeichnet, daß im Antriebsschlupfregelfall die Ventilanordnung (40) den Leitungsabschnitt (62) mit der Atmosphäre verbindet.

## FIG. 1

## FIG. 2

21870

## FIG. 3

FIG. 4

EP 0 347 583 A2

21870